# EUROPÄISCHE PATENTANMELDUNG

(11) **EP 1 710 785 A2**
(43) Veröffentlichungstag der Anmeldung: **11.10.2006**
(21) Anmeldenummer: 06002685.3
(22) Anmeldetag: 10.02.2006
(51) Int. Cl.: G10K 11/00

(54) **Vorrichtung mit einem Ultraschall- oder Radar-Sender, einem Empfänger und einem den Sender und der Empfänger aufnehmenden Gehäuse**

(30) Priorität: 07.04.2005 DE 102005017008
(71) Anmelder: Valeo Schalter und Sensoren GmbH, 74321 Bietigheim-Bissingen (DE)
(72) Erfinder: Grüdl, Dietmar, 71706 Markgröningen (DE); Jung, Thomas, 74199 Untergruppenbach (DE); Kupfernagel, Uwe, 71665 Vaihingen (DE); Katzenberger, Wolfgang, 86650 Wemding (DE); Gotzig, Heinrich, Dr., 74081 Heilbronn (DE)
(74) Vertreter: Dreiss, Fuhlendorf, Steimle & Becker

(57) **Zusammenfassung**

Die Erfindung betrifft eine Vorrichtung mit einem Sender, einem Empfänger und einem den Sender und den Empfänger aufnehmenden Gehäuse, wobei der Sender und der Empfänger in einem Durchbruch einer Außenhaut oder eines Anbauteils eines Kraftfahrzeugs angeordnet sind und von einem elastischen Entkopplungsmittel umgeben sind, wobei dass das elastische Entkopplungsmittel ein thermoplastisches Silikonelastomer (TPSE) ist.

## Beschreibung

Die Erfindung betrifft eine Vorrichtung mit einem Sender, einem Empfänger und einem den Sender und den Empfänger aufnehmenden Gehäuse, wobei der Sender und der Empfänger in einem Durchbruch einer Außenhaut oder eines Anbauteils eines Kraftfahrzeugs angeordnet und von einem elastischen Entkopplungsmittel umgeben sind.

Unter dem Oberbegriff Fahrerassistenzsysteme sind auch Vorrichtungen bekannt, die zum Beispiel als Einparkhilfe für Kraftfahrzeuge dienen. Diese Vorrichtungen sind Teil eines Abstandsmesssystems mit einem Sender, einem Empfänger und einem diese beiden Bauteile aufnehmenden Gehäuse. Mit dem Sender werden Ultraschallsignale ausgesandt, die von einem Gegenstand reflektiert und vom Empfänger aufgefangen werden. Die Zeitdifferenz zwischen dem Aussenden und dem Empfangen wird gemessen und hieraus die Entfernung des Gegenstands berechnet.

Um die fehlerfreie Funktion sicherzustellen, müssen der Sender und der Empfänger schwingungsentkoppelt im Gehäuse gehalten werden, sodass sich weder Schwingungen auf die Halterung ausbreitet noch Schwingungen von der Halterung auf den Sender und/oder Empfänger einstreuen. Hierfür wird in der Regel ein elastisches Entkopplungsmittel verwendet, wobei sich herausgestellt hat, dass Silikon besonders geeignet ist. In der Regel ist die Außenseite des Halters lackiert und es besteht häufig der Wunsch, dass auch der Sender und der Empfänger in der gleichen Farbe lackiert sind, um optisch in den Hintergrund zu treten. Es hat sich gezeigt, dass das Lackieren des aus Silikon bestehenden Entkopplungsmittels mit Schwierigkeiten verbunden ist, da der Lack an der Silikonoberfläche nur schwer anhaftet.

Der Erfindung liegt die Aufgabe zugrunde, eine Vorrichtung der eingangs genannten Art so weiterzubilden, dass auch das Entkopplungsmittel problemlos überlackiert werden kann.

Diese Aufgabe wird erfindungsgemäß mit einer Vorrichtung der eingangs genannten Art dadurch gelöst, dass das elastische Entkopplungsmittel ein thermoplastisches Silikonelastomer(TPSE) ist.

Durch die Verwendung eines thermoplastischen Silikonelastomers als elastisches Entkopplungsmittel wird die Eigenschaft des Silikons mit den Eigenschaften eines Thermoplasten ergänzt. Das Entkopplungsmittel ist thermoplastisch verarbeitbar und lackier- und überstreichbar. Dennoch besitzt das Entkopplungsmittel die für die Schwingungsentkopplung geforderten Eigenschaften, sodass Schwingungen zwischen dem Sender und dem Empfänger auf die Halterung nicht übertragen werden. Die Flexibilität bleibt über einen großen Temperaturbereich von -20°C bis +60°C erhalten.

Werden der Sender und der Empfänger von einer einzigen Membran gebildet, dann muss lediglich diese Membran und das Entkopplungsmittel, welches sich ringförmig um die Membran erstreckt, lackiert werden. Da diese zu lackierende Fläche in der Regel kleiner als 1 cm² ist, und die Membran sowie die Außenoberfläche des Entkopplungsmittels in der gleichen Ebene wie die Außenoberfläche der Halterung angeordnet sein können, kann die Vorrichtung absatzfrei in der Halterung angeordnet sein und ist nach dem Überlackieren nicht mehr sichtbar.

Der Sender und der Empfänger können bei einem Ausführungsbeispiel so ausgebildet sein, dass sie Ultraschallsignale senden und empfangen. Dabei werden der Sender und der Empfänger von einer aus Aluminium bestehenden Membran gebildet. Bei einem anderen Ausführungsbeispiel senden und empfangen der Sender und der Empfänger Radarsignale. Bei beiden Varianten eignet sich das thermoplastische Silikonelastomer als Entkopplungsmittel.

Bei einem bevorzugten Ausführungsbeispiel weist das thermoplastische Silikonelastomer Silikon sowie organische Ketten aufweist auf. Aufgrund dieser organischen Ketten besitzt das Silikonelastomer auch thermoplastische Eigenschaften und es wird ein Vernetzen des Silikons verhindert.

Um die Hafteigenschaften einer Lackierung zu verbessern sind dem thermoplastischen Silikonelastomer hydrophilisierende Additive zugesetzt. Dabei können sich die hydrophilisierenden Additive an der Oberfläche des thermoplastischen Silikonelastomers anlagern. Lediglich dort werden sie benötigt, da die Oberfläche lackiert werden soll. Es besteht aber auch die Möglichkeit, dass lediglich die Oberfläche des thermoplastischen Silikonelastomers hydrophylisiert ist. Dies kann durch eine Ionisierung der Oberfläche, zum Beispiel durch Coronaentladung oder dergleichen erfolgen. Die Oberfläche des thermoplastischen Silikonelastomers ist demnach hydrophil gegenüber wasserbasierten und/oder lösungsmittelbasierten Farben und Lacken.

Um die Verarbeitung des Entkopplungsmittels möglichst einfach zu gestalten, ist das thermoplastische Silikonelastomer spritzgusstechnisch verarbeitbar. Außerdem ist das thermoplastische Silikonelastomer wasserdampfdicht, sodass durch das Entkopplungsmittel keine Feuchtigkeit in das Bauteil eindringen kann.

Bei einer Weiterbildung der Erfindung ist vorgesehen, dass das thermoplastische Silikonelastomer mit einer weiteren Komponente compoundiert ist, um eine Haftverbesserung auf verschiedenen Meterialien, wie z.B. Metallen und Kunststoffen zu erreichen. Bei den Metallen kommen vor allem Stahl, Aluminium und Chrom in Betracht. Dabei ist die weitere Komponente ein TPU (thermoplastisches Polyurethan).

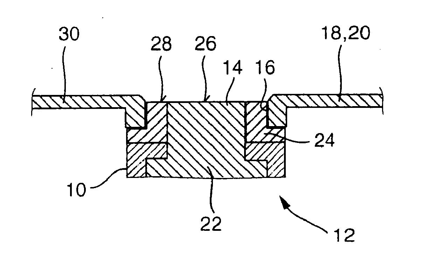

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung ist mit dem Bezugszeichen 10 ein Gehäuse eines Utraschallsensors 12 bezeichnet, in welchem elektronische Bauteile angeordnet sind und eine Stirnseite im Wesentlichen von einer Membran 14 zum Beispiel aus Aluminium gebildet wird, die einen Durchbruch 16 eines Anbauteils 18, zum Beispiel eines Stossfängers 20 eines Kraftfahrzeugs durchdringt. Die Membran 4 bildet sowohl den Sender als auch den Empfänger eine Ultraschalleinparkhilfevorrichtung. Die Membran 14 wird mittels eines Vergusses 22 im Gehäuse 10 gehalten und ist von einem Entkopplungsmittel 24 umgeben. Dieses Entkopplungsmittel 24 entkoppelt die Membran 14 vom Stossfänger 20 des Kraftfahrzeugs. Außerdem entkoppelt das Entkopplungsmittel 24 das Gehäuse 10 vom Stossfänger.

Das Entkopplungsmittel 24 wird zwischen den Stossfänger 20 und die Membran 14 sowie das Gehäuse 10 eingespritzt, wobei die Oberfläche 26 der Membran 14 sowie die Oberfläche 28 des Entkopplungsmittels 24 vorteilhaft in einer Ebene liegen, was aber nicht zwingend erforderlich ist. Diese Ebene kann geringfügig hinter die Ebene 30 des Stossfängers zurückversetzt sein, es besteht jedoch auch die Möglichkeit, dass die Ebenen 26 bis 30 zueinander fluchten. Aufgrund der vorteilhaften Eigenschaften des thermoplastischen Silikonelastomers kann das Entkopplungsmaterial nicht nur einfach spritzgusstechnisch verarbeitet werden, sondern die Oberfläche 28 kann genauso gut wie die Oberfläche 26 und die Oberfläche 30 überlackiert werden. Fluchten alle drei Ebenen zueinander, dann kann der Ultraschallsensor 12 unsichtbar im Stossfänger 20 montiert werden.

## Patentansprüche

1. Vorrichtung mit einem Sender, einem Empfänger und einem den Sender und den Empfänger aufnehmenden Gehäuse (10), wobei der Sender und der Empfänger in einem Durchbruch (16) einer Außenhaut oder eines Anbauteils (18) eines Kraftfahrzeugs angeordnet und von einem elastischen Entkopplungsmittel (24) umgeben sind, **dadurch gekennzeichnet, dass** das elastische Entkopplungsmittel (24) ein thermoplastisches Silikonelastomer (TPSE) ist.

2. Vorrichtung nach Anspruch 1, **dadurch gekennzeichnet, dass** der Sender und der Empfänger von einer einzigen Membran (14) gebildet werden.

3. Vorrichtung nach einem der vorhergehenden Ansprüche, **dadurch gekennzeichnet, dass** der Sender und der Empfänger Ultraschall- oder Radarsignale sendet und empfängt.

4. Vorrichtung nach einem der vorhergehenden Ansprüche, **dadurch gekennzeichnet, dass** das thermoplastische Silikonelastomer Silikon sowie organische Ketten aufweist.

5. Vorrichtung nach Anspruch 4, **dadurch gekennzeichnet, dass** die organische Ketten ein Vernetzen des Silikons verhindern.

6. Vorrichtung nach einem der vorhergehenden Ansprüche, **dadurch gekennzeichnet, dass** dem thermoplastischen Silikonelastomer hydrophilisierende Additive zugesetzt sind.

7. Vorrichtung nach Anspruch 6, **dadurch gekennzeichnet, dass** sich die hydrophylisierenden Additive an der Oberfläche (28) des thermoplastischen Silikonelastomers anlagern.

8. Vorrichtung nach einem der vorhergehenden Ansprüche, **dadurch gekennzeichnet, dass** die Oberfläche (28) des thermoplastischen Silikonelastomers hydrophylisiert ist.

9. Vorrichtung nach einem der vorhergehenden Ansprüche, **dadurch gekennzeichnet, dass** die Oberfläche (28) des thermoplastischen Silikonelastomers hydrophil gegenüber wasserbasierten und/oder lösungsmittelbasierten Farben und Lacken ist.

10. Vorrichtung nach einem der vorhergehenden Ansprüche, **dadurch gekennzeichnet, dass** das thermoplastische Silikonelastomer spritzgusstechnisch verarbeitbar ist.

11. Vorrichtung nach einem der vorhergehenden Ansprüche, **dadurch gekennzeichnet, dass** das thermoplastische Silikonelastomer wasserdampfdicht ist.

12. Vorrichtung nach einem der vorhergehenden Ansprüche, **dadurch gekennzeichnet, dass** das thermoplastische Silikonelastomer mit einer weiteren Komponente compoundiert ist, um eine Haftverbesserung zu erreichen.

13. Vorrichtung nach Anspruch 12, **dadurch gekennzeichnet, dass** die weitere Komponente ein TPU ist.
